# FASCICULE DE BREVET EUROPEEN

(11) **EP 3 425 354 B1**
(45) Date de publication et mention de la délivrance du brevet: **12.07.2023**
(21) Numéro de dépôt: 18180891.6
(22) Date de dépôt: 29.06.2018
(51) Int. Cl.: G01J 3/02, G01J 3/14, G01J 3/28

(54) **SPECTROPHOTOMÈTRE HYPERSPECTRAL LARGE BANDE**
HYPERSPEKTRALER BREITBAND-SPEKTROPHOTOMETER
BROADBAND HYPERSPECTRAL SPECTROPHOTOMETER

(30) Priorité: 06.07.2017 FR 1756384
(43) Date de publication de la demande: 09.01.2019
(73) Titulaire: Centre National d'Etudes Spatiales, 75039 Paris Cedex 01 (FR); CENTRE NATIONAL DE LA RECHERCHE SCIENTIFIQUE, 75016 Paris (FR); SORBONNE UNIVERSITE, 75006 Paris (FR)
(72) Inventeur: BOURCIER, Frédéric, 31450 POMPERTUZAT (FR); WALTER, Philippe, 92210 SAINT CLOUD (FR)
(74) Mandataire: Germain Maureau

(56) Documents cités:
- WO-A1-2015/071181
- US-A1- 2002 163 715
- US-A1- 2005 280 906
- US-B2- 6 909 540
- US-B2- 7 335 898

## Description

### DOMAINE TECHNIQUE GENERAL ET ETAT DE LA TECHNIQUE

L'invention concerne le domaine de l'imagerie hyperspectrale ou spectro-imagerie qui consiste à acquérir une image dans un grand nombre de bandes spectrales étroites.

Pour acquérir des images hyperspectrales, on connait des instruments catadioptriques (voir les documents US 5 459 325 et US 4 215 273). Toutefois, ces instruments présentent l'inconvénient d'avoir des lentilles qui induisent un chromatisme et qui de fait ne permet pas d'avoir toutes les longueurs d'ondes.

En outre, ces instruments sont encombrants ce qui s'avère être un inconvénient lorsque l'objet à imager n'est pas accessible simplement. US2002/0163715A1, US7335898 B2, US6909540 B2, WO2015/071181 A1 divulguent des systèmes présentant des ensembles d'illumination à balayage.

### PRESENTATION DE L'INVENTION

L'invention propose de pallier les inconvénients précités.

A cet effet, l'invention propose un spectrophotomètre imageur hyperspectral large bande selon la revendication 1.

L'invention est avantageusement complétée par les caractéristiques suivantes, prises seules ou en une quelconque de leur combinaison techniquement possible.

Le dispositif d'obturation comprend une lame noire montée pivotante devant la face avant du premier miroir et deux butées permettant de définir les deux positions.

La source de l'ensemble d'illumination est configurée pour émettre un faisceau dans le domaine de l'ultra-violet, le visible ou infrarouge, et est de préférence un Laser, l'ensemble d'illumination comprenant en outre un ensemble de mise en forme du faisceau émis par la source afin d'illuminer uniquement une ligne sur l'objet à analyser.

L'ensemble d'illumination comprend un miroir plan d'injection du faisceau mis en forme vers le miroir de focalisation, le faisceau mis en forme étant tel que son image à travers ledit miroir plan d'injection est superposée à la fente du premier miroir de repliement.

L'ensemble de mise en forme comprend, dans le sens de propagation du faisceau lumineux, une lentille génératrice d'une raie uniforme en éclairement, une lentille cylindrique collimatrice sur l'axe de la raie, une lentille pour adapter le grandissement.

L'ensemble d'illumination comprend une sphère intégrante placée devant la source, la sphère comprenant une fente configurée pour laisser passer un faisceau lumineux.

L'ensemble d'illumination comprend en outre un miroir sphérique percé d'un anneau centré sur la fente de la sphère et est disposé devant la sphère, ledit miroir sphérique étant configuré pour lasser passer un faisceau et pour réfléchir de la lumière et la renvoyer la sphère.

Le spectrophotomètre comprend un ensemble d'imagerie et un ensemble de détection, l'ensemble d'imagerie étant agencé par rapport au premier miroir pour amener un faisceau provenant de la fente vers l'ensemble de détection.

L'ensemble de détection comprend un capteur CCD ou CMOS.

### PRESENTATION DES FIGURES

D'autres caractéristiques, buts et avantages de l'invention ressortiront de la description qui suit, qui est purement illustrative et non limitative, et qui doit être lue en regard des dessins annexés sur lesquels :
- la figure 1 illustre un spectrophotomètre imageur selon un premier mode de réalisation de l'invention ;
- les figures 2 et 3 illustrent un dispositif d'obturation d'un spectrophotomètre imageur selon l'invention ;
- la figure 4 illustre un spectrophotomètre imageur selon un second mode de réalisation de l'invention ;
- la figure 5 illustre un spectrophotomètre imageur selon un troisième mode de réalisation de l'invention ;
- la figure 6 illustre un spectrophotomètre imageur selon un quatrième mode de réalisation de l'invention.

Sur l'ensemble des figures les éléments similaires portent des références identiques.

### DESCRIPTION DETAILLEE DE L'INVENTION

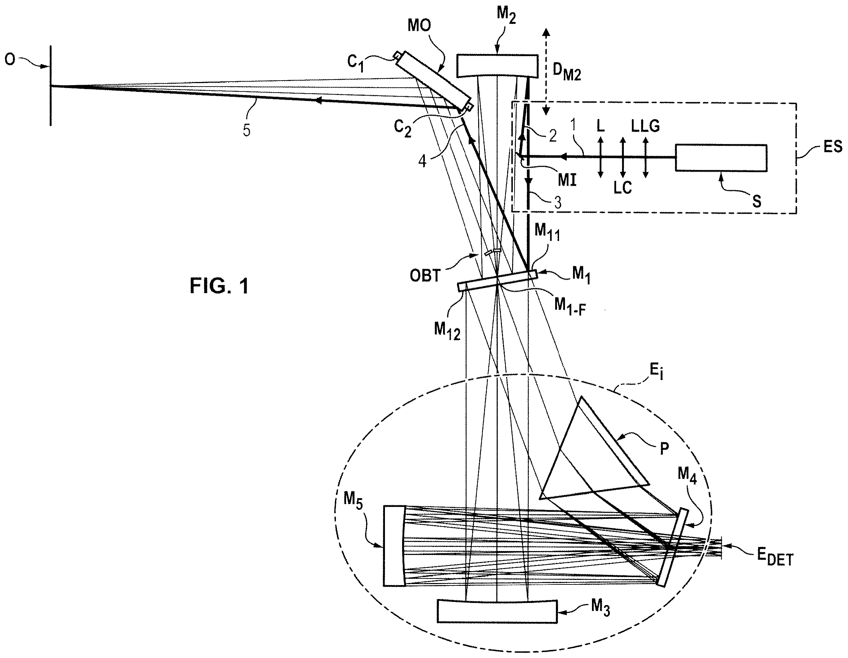

La **figure 1** illustre un spectrophotomètre imageur selon un premier mode de réalisation de l'invention.

Un objet O à analyser est disposé dans le plan objet du spectrophotomètre imageur.

Afin d'éclairer l'objet O, un ensemble ES d'illumination comprend une source S d'émission d'un faisceau électromagnétique dans une longueur d'onde donnée ou un domaine de longueur d'onde donné à destination de l'objet à analyser.

Le spectrophotomètre au moyen de l'ensemble ES d'illumination permet de balayer ligne par ligne l'objet O à analyser au moyen de la source d'émission S.

Selon ce premier mode de réalisation, l'ensemble ES d'illumination comprend une source Laser et émet dans le domaine de l'ultra-violet du visible ou de l'infrarouge et permet de caractériser un objet O par sa réponse spectrale.

L'objet O excité par une longueur d'onde appartenant au domaine de l'ultraviolet du visible ou de l'infrarouge réemet un faisceau dans des longueurs d'onde plus élevées allant de l'Ultra-violet au visible et l'infrarouge. C'est cette fluorescence qui permet de caractériser l'objet O à analyser.

L'objet O à analyser peut être une colle, une résine, une peinture, un élément organique, biologique ou tout autre matériau ou nanomatériau ayant des propriétés fluorescentes.

L'ensemble ES d'illumination comprend un ensemble L, LC, LLG de mise en forme du faisceau émis par la source afin d'illuminer uniquement une ligne sur l'objet O à analyser.

Cet ensemble de mise en forme comprend en particulier trois lentilles L, LC, LLG devant la source d'émission S du faisceau lumineux :
- Lentille LLG : lentille génératrice de raie laser ;
- Lentille LC : lentille cylindrique collimatrice sur l'axe de la raie Laser ;
- Lentille L ou système de lentilles : Lentille pour imager la ligne laser à travers le spectrophotomètre imageur : le grandissement est ajusté à la zone de balayage du spectrophotomètre imageur.

L'ensemble ES d'illumination comprend un miroir d'injection MI qui permet d'injecter un faisceau (repère 1) issu de la source S vers le spectrophotomètre imageur.

Un faisceau (repère 2) issu de la réflexion du faisceau issu de la source sur le miroir MI d'injection arrive sur un miroir M2 de focalisation qui est de préférence un miroir sphérique de focalisation.

Le faisceau (repère 3) issu du miroir M2 de focalisation arrive sur un premier miroir M1 de repliement et notamment sur la face avant M11 avant de ce dernier. Le premier M1 miroir de repliement comprend en outre une face arrière M12 elle aussi réfléchissante et une fente M1-F en son centre. La fente M1-F permet de laisser passer le faisceau et a une largeur de quelques dizaines de microns pour quelques millimètres de long.

De manière préférée, la mise en forme du faisceau laser doit être telle que son image à travers le miroir d'injection MI soit superposée à la fente M1-F du premier miroir M1 de repliement.

Le premier miroir M1 de repliement réfléchi le faisceau (repère 4) vers un miroir M0 de balayage plan mobile en rotation lequel réfléchit le faisceau (repère 5) vers l'objet O à analyser.

De manière avantageuse, l'éclairement de l'objet O se fait latéralement avec un faisceau laser couvrant la zone d'analyse : le laser forme une ligne sur la zone à analyser qui correspond au champ du spectrophotomètre imageur.

Une telle configuration permet d'éviter la réflexion spéculaire en retour dans le spectrophotomètre sur les objets brillants.

En outre, l'éclairage se fait uniquement sur la zone utile et limite donc la photo-dégradation et l'échauffement par la source (par exemple UV dans le cas de la fluorescence) des zones non analysées. En conséquence, la dose d'exposition correspond à la dose strictement nécessaire à l'analyse.

Afin d'effectuer une mise au point, de chaque côté du miroir M0 sont disposés des capteurs C1, C2 de mesure qui permettent de mesurer une distance entre l'objet O et le miroir M0 de balayage. Le miroir M2 de focalisation est quant à lui mobile en translation (selon l'axe DM2 sur la figure 1) pour adapter l'imageur à la distance mesurée par les capteurs C1, C2 de mesure. Cette mobilité permet d'adapter le plan de focalisation du spectrophotomètre à la position de l'objet ou de faire évoluer le plan de focalisation pour mesurer dans le volume de l'objet.

Le faisceau issu de l'objet O à analyser arrive sur la face M11 avant du premier miroir de repliement et réfléchit le faisceau vers le miroir M2 de focalisation lequel focalise le faisceau vers la fente M1-F du premier miroir M1 de repliement. De cette façon, le faisceau traverse l'épaisseur du premier miroir M1 de repliement via la fente M1-F qui ne sélectionne qu'une ligne du champ objet.

Le faisceau traversant la fente M1-F arrive sur ensemble Eᵢ d'imagerie qui permet d'amener ce faisceau vers un ensemble E_{DET} de détection qui est uniquement constitué d'un capteur CDD ou CMOS.

Pour permettre l'acquisition des faisceaux, le spectrophotomètre imageur comprend un dispositif OBT d'obturation du faisceau disposé devant la face avant M11 du premier miroir et à hauteur de la fente M1-F de ce premier miroir.

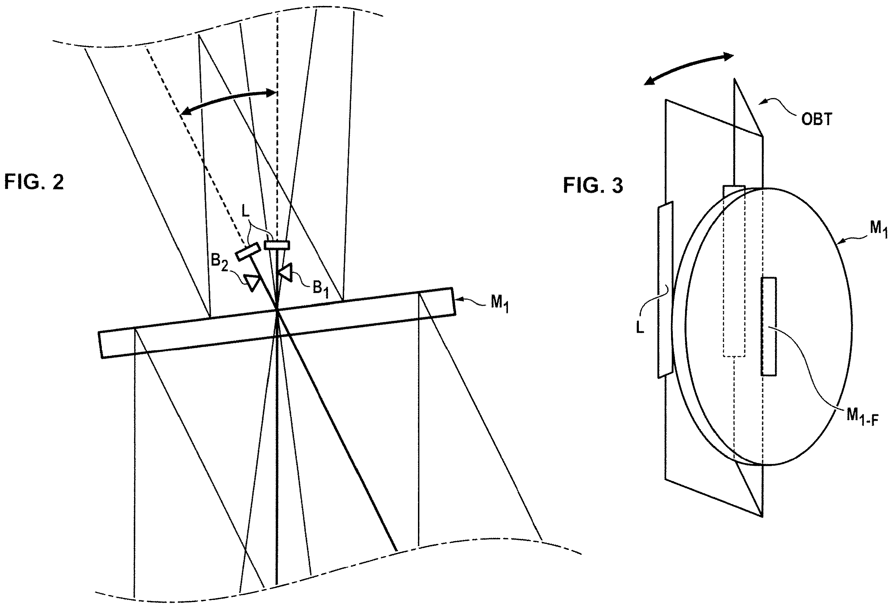

Comme illustré en détail sur les **figures 2** et **3****,** le dispositif d'obturation comprend une lame L verticale plus large que la fente M1-F et deux butées B1, B2 qui définissent deux positions entre lesquelles la lame L est mobile.

Les butées B1, B2 limitant les deux positions du dispositif d'obturation sont réglables soit de manière à masquer le faisceau optique sur l'axe en B1, soit à occulter la lumière directe venant de l'objet O qui n'est pas réfléchie par M1 et qui traverse la fente..

Ainsi, la lame est mobile selon deux positions, une position ouverte selon laquelle elle empêche un faisceau parasite direct issu du miroir M0 de balayage de passer par la fente, le faisceau (utile) issu de l'objet passe toutefois par la fente via M2, et une position fermée empêchant n'importe quel faisceau de passer par la fente M1-F. Ainsi, le capteur CCD ou CMOS n'est pas éclairé pendant sa lecture, le transfert des données et le changement de visée

Par conséquent, le dispositif d'obturation a une double fonction :
- Obturer le faisceau à la place d'un obturateur mécanique traditionnel à durée de vie limitée ;
- Supprimer la lumière parasite qui rentre directement dans le spectrophotomètre via le miroir de changement de visée M0 et la fente M1-F ;

Un tel dispositif d'obturation présente l'avantage d'être robuste comparativement aux obturateurs classiques à iris ou système équivalent qui fonctionne avec des lames qui frottent les unes sur les autres. En effet, l'acquisition d'une image hyperspectrale représente souvent plusieurs centaines ou plusieurs milliers d'acquisitions (ouverture fermeture du dispositif d'obturation) sans compter les réglages précédents les prises de vue.

Ainsi, avec une le dispositif d'obturation utilisant seulement une lame noire (puisque le champ est imagé sous la forme d'une ligne au niveau de la fente) fixée grâce à une liaison pivot bloqué (sur roulements à bille par exemple), il n'y a pas de frottements comme entre les volets d'un obturateur classique pour pupille circulaire, et donc pas d'usure prématurée. Une translation au niveau d'une liaison pivot est également possible.

L'ensemble Eᵢ d'imagerie comprend un miroir M3 de collimation parabolique sur lequel arrive le faisceau issu de la fente M1-F. Les faisceaux sont alors réfléchis par ce miroir M3 de collimation et réfléchis par la face M12 arrière du premier miroir M1 de repliement.

Le faisceau réfléchi par la face M12 arrière du premier miroir M1 de repliement passe par un prisme P qui disperse le faisceau selon les longueurs d'onde. Les faisceaux dispersés arrivent sur un second miroir M4 de repliement (qui est percé en son centre, le perçage est circulaire ou rectangulaire) qui réfléchit les faisceaux vers un miroir M5 d'imagerie. Le miroir M5 d'imagerie réfléchit les faisceaux vers l'ensemble de détection.

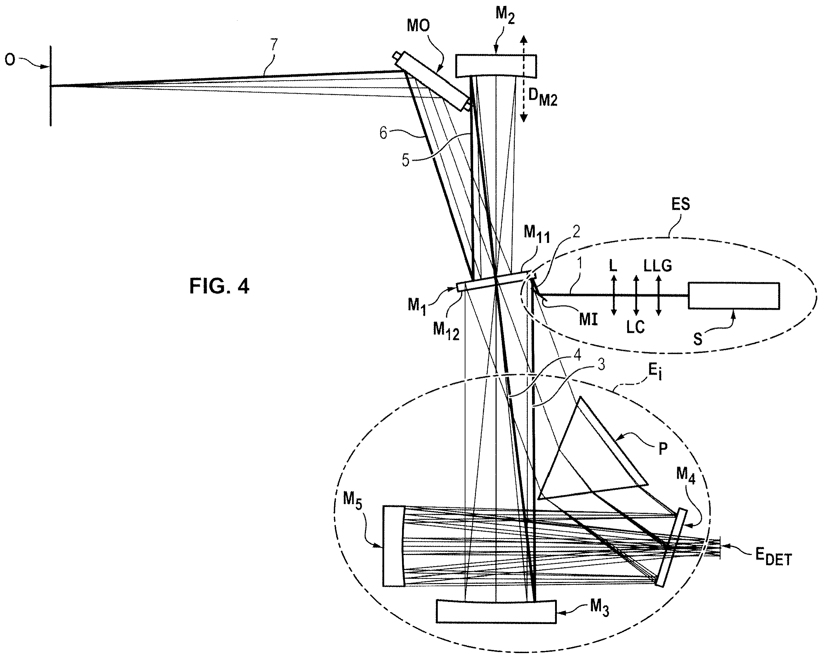

Selon un second mode de réalisation, illustré sur la **figure 4****,** l'ensemble ES d'illumination peut être plus en amont dans le spectrophotomètre imageur.

Selon ce second mode de réalisation, le chemin optique pour aller de l'ensemble ES d'illumination est le suivant :
- Un faisceau (repère 1) issu de la source S arrive sur le miroir MI d'injection qui amène le faisceau (repère 2) vers la face M12 arrière du premier miroir M1 de repliement lequel réfléchit le faisceau (repère 3) vers le miroir M3 de collimation ;
- Le miroir M3 de collimation réfléchit le faisceau (repère 4) vers le miroir M2 de collimation ;
- Le miroir M2 de collimation réfléchit le faisceau (repère 5) vers la face M11 avant du premier miroir M1 de repliement ;
- Le miroir M1 de repliement réfléchit le faisceau (repère 6) vers le miroir M0 de balayage ;
- Le miroir M0 de balayage réfléchit le faisceau (repère 7) vers l'objet O à analyser.

Le chemin optique de l'objet O vers l'ensemble E_{DET} de détection est identique à celui du premier mode de réalisation.

Les différents miroirs de ce second mode de réalisation ainsi que l'ensemble d'imagerie sont identiques au premier mode de réalisation. En outre, le spectrophotomètre imageur selon ce second mode de réalisation comprend un dispositif d'obturation.

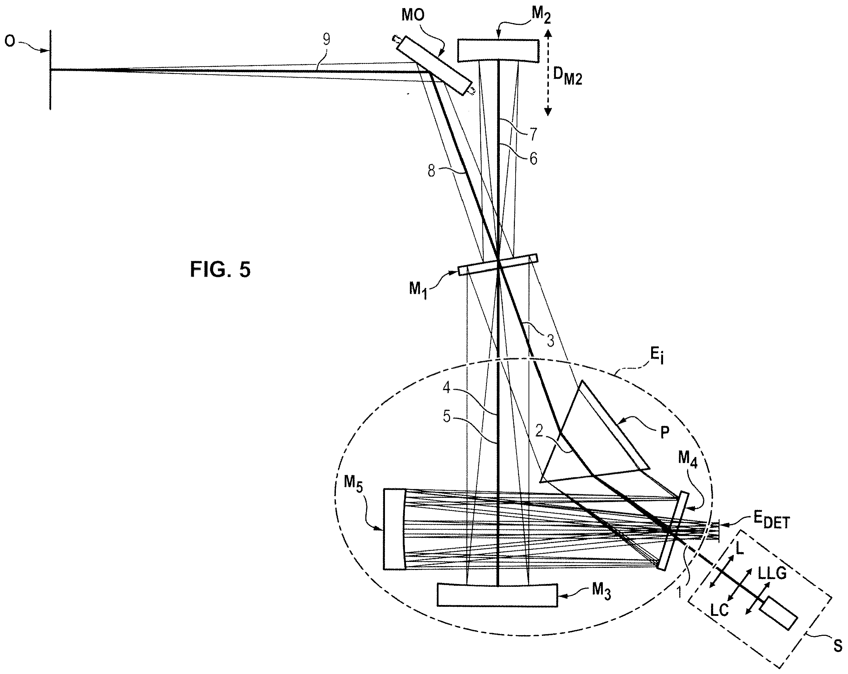

Selon un troisième mode de réalisation, illustré sur la **figure 5****,** les axes optiques de la source S et de l'ensemble E_{DET} de détection sont alignés ce qui implique qu'il n'y a pas de parallaxe pour toutes les distances de travail. L'ensemble ES d'illumination peut être au niveau de l'ensemble de détection.

Selon ce troisième mode de réalisation on remarque que l'ensemble d'illumination ne comprend pas de miroir d'injection :
- un faisceau (repère 1) issu de la source S passe par la zone percée du miroir M4 et arrive sur le prisme P et traverse le prisme P (repère 2);
- le faisceau issu du prisme (repère 3) arrive sur le premier miroir M1 de repliement lequel réfléchi le faisceau (repère 4) vers le miroir M3 de collimation qui à son tour réfléchit le faisceau (repère 5) vers le premier miroir M1 de repliement ;
- le faisceau issu du premier miroir de repliement (repère 6) arrive sur le miroir M2 de collimation lequel réfléchit le faisceau (repère 7) vers le premier miroir M1 de repliement qui est à son tour réfléchi par le premier miroir M1 de repliement vers le miroir M0 de balayage (repère 8) ;
- le faisceau réfléchi par le miroir M0 de balayage arrive sur l'objet O à analyser.

Les différents miroirs de ce troisième mode de réalisation ainsi que l'ensemble d'imagerie sont identiques au premier mode de réalisation. En outre, le spectrophotomètre imageur selon ce troisième mode de réalisation comprend un dispositif d'obturation.

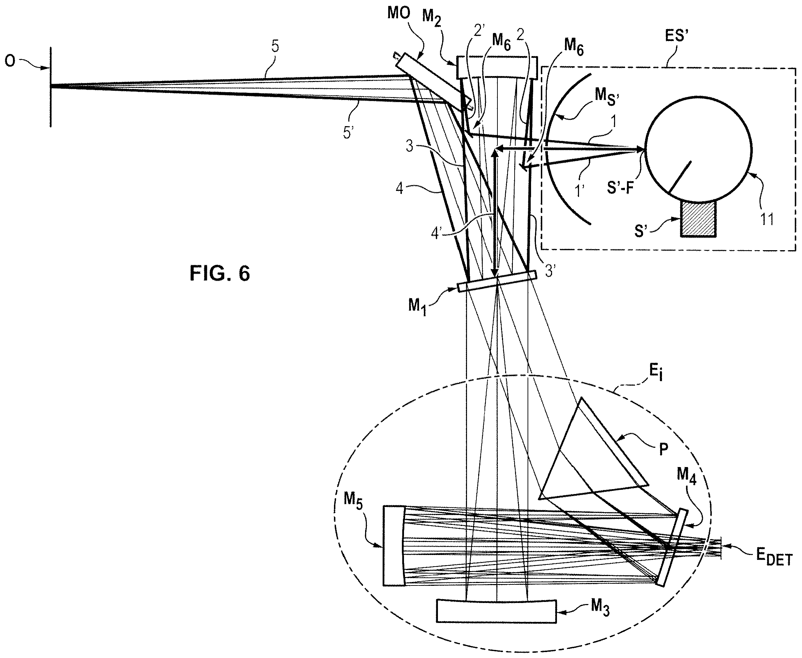

La **figure 6** illustre un quatrième mode de réalisation, selon lequel la source S' lumineuse de l'ensemble ES' d'illumination est constituée d'une source polychromatique. Un flux lumineux est émis dans une sphère intégrante 11 placée devant la source S' lumineuse qui uniformise le flux à travers le port S'-F de sortie de la sphère 11 qui est dans ce cas une fente de mêmes caractéristiques géométriques que la fente M1-F.

Une partie du flux issue de la fente S'-F de la sphère 11 est orienté vers le miroir collecteur M2 du spectrophotomètre via un miroir M6. Le miroir collecteur M2 éclaire la zone d'analyse en refocalisant le faisceau de lumière blanche issu de la sphère comme s'il venait de la fente. Ici aussi, l'ensemble ES' d'illumination génère donc un éclairement de la zone d'analyse (en forme de ligne).

De manière complémentaire, un miroir MS' sphérique (ou une surface occultante équivalente) percé d'un anneau centré sur la fente S'-F de la sphère est disposé devant la sphère. Dans le cas d'un miroir sphérique, la lumière réfléchie retourne dans la sphère.

Jusqu'à l'objet O, le chemin optique est le suivant :
- Le faisceau (repères 1, 1') issu de la sphère est réfléchi par le miroir M6 vers le miroir M2 de focalisation (repères 2, 2') ;
- Le faisceau 2, 2' issu du miroir M2 de focalisation arrive alors sur le premier miroir M1 de repliement ;
- Le faisceau (repères 3, 3') est alors réfléchi vers le premier miroir M1 de repliement lequel réfléchit le faisceau (repères 4, 4') vers le miroir M0 de balayage ;
- Le miroir M0 de balayage réfléchit le faisceau (repères 5, 5') vers l'objet O à analyser.

Ce quatrième mode est avantageux pour les raisons suivantes :
- L'éclairage est intégré dans le spectrophotomètre imageur ;
- Seule la zone utile est éclairée quel que soit la distance de travail ;
- Le balayage est synchrone avec la source ;
- L'étalonnage de l'éclairement sur la ligne se fait en une seule acquisition sur un plan uniforme et permet ensuite des corrections radiométriques d'uniformité.

Les différents miroirs de ce quatrième mode de réalisation ainsi que l'ensemble d'imagerie sont identiques au premier mode de réalisation. En outre, le spectrophotomètre selon ce quatrième mode de réalisation comprend un dispositif d'obturation.

## Revendications

1. Spectrophotomètre imageur hyperspectral large bande configuré pour analyser un objet (O), ledit spectrophotomètre comprenant :
un ensemble (ES, ES') d'illumination comprenant une source (S, S') d'émission d'un faisceau lumineux, ledit ensemble étant configuré pour que le faisceau lumineux balaye ligne par ligne l'objet à analyser (O) ;
un miroir (M2) de focalisation configuré pour recevoir le faisceau lumineux émis par l'ensemble d'illumination (ES, ES');
un premier miroir (M1) de repliement configuré pour faire face au miroir de focalisation (M2) pour recevoir le faisceau lumineux réfléchi par le miroir de focalisation (M2);
un miroir (M0) de balayage plan mobile en rotation, configuré pour recevoir le faisceaux lumineux réfléchi par le premier miroir de repliement (M1) et pour réfléchir le faisceaux lumineux vers l'objet (O) le long d'une ligne qui sera déplacée sur l'objet (O) via le miroir (M0) de balayage;
le spectrophotomètre imageur comprenant deux capteurs (C1, C2) de mesure d'une distance entre l'objet (O) et le miroir (M0) de balayage, le miroir (M2) de focalisation étant mobile en translation pour adapter l'imageur à la distance mesurée par lesdits capteurs de mesure, et le premier miroir (M1) de repliement comprenant une face avant (M11) orientée vers le miroir (M2) de focalisation et une face arrière (M12) opposée à ladite face (M11) avant, ledit premier miroir (M1) comprenant une fente (M1-F) configurée pour laisser passer un faisceau issu de l'objet, le spectrophotomètre imageur comprenant un dispositif (OBT) d'obturation d'un faisceau disposé devant la face avant (M11) du premier miroir (M1) et devant la fente (M1-F) dudit premier miroir, le dispositif d'obturation comprenant une lame verticale plus large que la fente, ladite lame étant mobile selon deux positions, une position ouverte selon laquelle elle empêche un faisceau parasite direct issu du miroir (M0) de balayage de traverser ladite fente, le faisceau issu de l'objet traversant ladite fente, et une position fermée empêchant le faisceau issu de l'objet de passer par la fente (M1-F).

2. Spectrophotomètre imageur selon la revendication 1, dans lequel le dispositif (OBT) d'obturation comprend une lame noire montée pivotante devant la face avant du premier miroir et deux butées (B1, B2) permettant de définir les deux positions.

3. Spectrophotomètre imageur selon l'une des revendications précédentes, dans lequel la source (S) de l'ensemble (ES) d'illumination est configurée pour émettre un faisceau dans le domaine de l'ultra-violet, le visible ou infrarouge, et est de préférence un Laser, l'ensemble d'illumination comprenant en outre un ensemble (L, LC, LLG) de mise en forme du faisceau émis par la source afin d'illuminer uniquement une ligne sur l'objet (O) à analyser.

4. Spectrophotomètre selon l'une des revendications précédentes, dans lequel l'ensemble (ES) d'illumination comprend un miroir plan (MI) d'injection du faisceau mis en forme vers le miroir (M2) de focalisation, le faisceau mis en forme étant tel que son image, qui se forme sur le premier miroir (M1) de repliement,après réflexion sur ledit miroir plan d'injection (MI), puis sur le miroir (M2) de focalisation, puis sur le premier miroir (M1) de repliement, puis sur le miroir (M0) de balayage, puis sur l'objet (O) puis à nouveau sur le miroir de balayage (M0), et à nouveau sur le premier miroir (M1) et sur le miroir (M2) de focalisation, est superposée à la fente (M1-F) du premier miroir (M1) de repliement.

5. Spectrophotomètre imageur selon la revendication précédente, dans lequel l'ensemble de mise en forme comprend, dans le sens de propagation du faisceau lumineux, une lentille (LLG) génératrice d'une raie uniforme en éclairement, une lentille (LC) cylindrique collimatrice sur l'axe de la raie, une lentille (L) pour adapter le grandissement.

6. Spectrophotomètre imageur selon l'une des revendications 1 à 3, dans lequel l'ensemble (ES') d'illumination comprend une sphère (11) intégrante placée devant la source (S'), la sphère (11) comprenant une fente (S'-F) configurée pour laisser passer un faisceau lumineux.

7. Spectrophotomètre imageur selon la revendication précédente, dans lequel l'ensemble (ES') d'illumination comprend en outre un miroir sphérique (MS') percé d'un anneau centré sur la fente (S'-F) de la sphère et est disposé devant la sphère, ledit miroir sphérique (MS') étant configuré pour lasser passer un faisceau et pour réfléchir de la lumière et la renvoyer la sphère (11).

8. Spectrophotomètre imageur selon l'une des revendications 1 à 7, comprenant un ensemble (Eᵢ) d'imagerie et un ensemble (E_{DET}) de détection, l'ensemble d'imagerie étant agencé par rapport au premier miroir (M1) pour amener un faisceau provenant de la fente (M1-F) vers l'ensemble (E_{DET}) de détection.

9. Spectrophotomètre imageur selon la revendication précédente, dans lequel l'ensemble (E_{DET}) de détection comprend un capteur CCD ou CMOS.

## Patentansprüche

1. Breitbandiges hyperspektrales abbildendes Spektralphotometer, das zum Analysieren eines Objekts (O) konfiguriert ist, wobei das Spektralphotometer umfasst:
eine Beleuchtungsanordnung (ES, ES') mit einer Quelle (S, S') zur Abgabe eines Lichtstrahls, wobei die Anordnung so konfiguriert ist, dass der Lichtstrahl das zu analysierende Objekt (O) Linie für Linie abtastet;
einen Fokussierspiegel (M2), der so konfiguriert ist, dass er den von der Beleuchtungsanordnung (ES, ES') abgegebenen Lichtstrahl empfängt;
einen ersten Klappspiegel (M1), der so konfiguriert ist, dass er dem Fokussierspiegel (M2) gegenüberliegt, um den von dem Fokussierspiegel (M2) reflektierten Lichtstrahl zu empfangen;
einen drehbaren ebenen Abtastspiegel (M0), der so konfiguriert ist, dass er den vom ersten Klappspiegel (M1) reflektierten Lichtstrahl empfängt und den Lichtstrahl in Richtung des Objekts (O) entlang einer Zeile reflektiert, die über den Abtastspiegel (M0) auf das Objekt (O) verschoben wird;
das abbildende Spektralphotometer zwei Sensoren (C1, C2) zur Messung eines Abstands zwischen dem Objekt (O) und dem Abtastspiegel (M0) umfasst, wobei der Fokussierspiegel (M2) translatorisch beweglich ist, um das Abbildungsgerät an den von den Messsensoren gemessenen Abstand anzupassen, und der erste Klappspiegel (M1) eine Vorderseite (M11), die zum Fokussierspiegel (M2) gerichtet ist, und eine Rückseite (M12) umfasst, die der Vorderseite (M11) gegenüberliegt, wobei der erste Spiegel (M1) einen Schlitz (M1-F) umfasst, der so konfiguriert ist, dass er einen vom Objekt ausgehenden Strahl hindurchlässt, wobei das abbildende Spektralphotometer eine Vorrichtung (OBT) zum Verschließen eines Strahls umfasst, die vor der Vorderseite (M11) des ersten Spiegels (M1) und vor dem Schlitz (M1-F) des ersten Spiegels angeordnet ist, wobei die Verschlussvorrichtung eine vertikale Lamelle umfasst, die breiter als der Schlitz ist, wobei die Lamelle in zwei Positionen beweglich ist, einer offenen Position, gemäß der sie verhindert, dass ein direkter, vom Abtastspiegel (M0) ausgehender Streustrahl den Schlitz durchquert, wobei der vom Objekt ausgehende Strahl den Schlitz durchquert, und einer geschlossenen Position, die verhindert, dass der vom Objekt ausgehende Strahl durch den Schlitz (M1-F) hindurchgeht.

2. Abbildendes Spektralphotometer nach Anspruch 1, bei dem die Vorrichtung (OBT) zum Verschließen eine schwarze Platte, die schwenkbar vor der Vorderseite des ersten Spiegels angebracht ist, und zwei Anschläge (B1, B2) umfasst, die es ermöglichen, die beiden Positionen zu bestimmen.

3. Abbildendes Spektralphotometer nach einem der vorhergehenden Ansprüche, wobei die Quelle (S) der Beleuchtungsanordnung (ES) so konfiguriert ist, dass sie einen Strahl im ultravioletten, sichtbaren oder infraroten Bereich abgibt, und vorzugsweise ein Laser ist, wobei die Beleuchtungsanordnung ferner eine Anordnung (L, LC, LLG) zur Formung des von der Quelle abgegebenen Strahls umfasst, um nur eine Linie auf dem zu untersuchenden Objekt (O) zu beleuchten.

4. Spektralphotometer nach einem der vorhergehenden Ansprüche, bei dem die Beleuchtungsanordnung (ES) einen ebenen Injektionsspiegel (MI) zur Injektion des geformten Strahls in Richtung des Fokussierungsspiegels (M2) umfasst, wobei der geformte Strahl so beschaffen ist, dass sein Bild, das sich auf dem ersten Klappspiegel (M1) bildet, nach der Reflexion an dem ebenen Injektionsspiegel (MI), dann am Fokussierspiegel (M2), dann am ersten Klappspiegel (M1), dann am Abtastspiegel (M0), dann am Objekt (O), dann wieder am Abtastspiegel (M0), und wieder am ersten Spiegel (M1) und am Fokussierspiegel (M2), dem Spalt (M1-F) des ersten Klappspiegels (M1) überlagert ist.

5. Abbildendes Spektralphotometer nach dem vorhergehenden Anspruch, bei dem die Formgebungsanordnung in der Ausbreitungsrichtung des Lichtstrahls eine Linse (LLG), die eine in der Beleuchtung gleichmäßige Linie erzeugt, eine zylindrische Kollimatorlinse (LC) auf der Achse der Linie, eine Linse (L) zur Anpassung der Vergrößerung umfasst.

6. Abbildendes Spektralphotometer nach einem der Ansprüche 1 bis 3, wobei die Beleuchtungsanordnung (ES') eine vor der Quelle (S') angeordnete Ulbrichtsche Kugel (11) umfasst, wobei die Kugel (11) einen Schlitz (S'-F) umfasst, der so konfiguriert ist, dass er einen Lichtstrahl hindurchlässt.

7. Abbildendes Spektralphotometer nach dem vorhergehenden Anspruch, wobei die Beleuchtungsanordnung (ES') ferner einen sphärischen Spiegel (MS') umfasst, der von einem Ring durchbrochen ist, der auf den Schlitz (S'-F) der Kugel zentriert ist und vor der Kugel angeordnet ist, wobei der sphärische Spiegel (MS') so konfiguriert ist, dass er einen Strahl hindurchlässt und Licht reflektiert und es zur Kugel (11) zurückstrahlt.

8. Abbildendes Spektralphotometer nach einem der Ansprüche 1 bis 7, mit einer abbildenden Anordnung (Eᵢ) und einer erfassenden Anordnung (E_{DET}), wobei die abbildende Anordnung in Bezug auf den ersten Spiegel (M1) angeordnet ist, um einen Strahl aus dem Schlitz (M1-F) zur erfassenden Anordnung (E_{DET}) zu führen.

9. Abbildendes Spektralphotometer nach dem vorhergehenden Anspruch, wobei die erfassende Anordnung (E_{DET}) einen CCD- oder CMOS-Sensor umfasst.

## Claims

1. A broadband hyperspectral imaging spectrophotometer configured to analyze an object (O), said spectrophotometer comprising:
an illumination assembly (ES, ES') comprising a source (S, S') for emitting a light beam, said assembly being configured such that the light beam scans line by line the object (O) to be analyzed;
a focusing mirror (M2) configured to receive the light beam emitted by the illumination assembly (ES, ES');
a first fold mirror (M1) configured so as to face the focusing mirror (M2) to receive the light beam reflected by the focusing mirror (M2);
a rotatably movable flat scanning mirror (M0) configured to receive the light beam reflected by the first fold mirror (M1) and to reflect the light beam towards the object (O) along a line which will be moved on the object (O) via the scanning mirror (M0);
the imaging spectrophotometer comprising: two sensors (C1, C2) for measuring a distance between the object (O) and the scanning mirror (M0),
the focusing mirror (M2) being movable in translation to adapt the imager to the distance measured by said measurement sensors,
the first fold mirror (M1) comprising a front face (M11) oriented towards the focusing mirror (M2) and a rear face (M12) opposite to said front face (M11), said first mirror (M1) comprising a slot (M1-F) configured to allow a beam coming from the object to pass, the imaging spectrophotometer comprising a device (OBT) for blocking a beam disposed in front of the front face (M11) of the first mirror (M1) and in front of the slot (M1-F) of said first mirror, the blocking device comprising a vertical blade wider than the slot, said blade being movable in two positions, an open position in which it prevents a direct parasitic beam coming from the scanning mirror (MO) from passing through said slot, the beam coming from the object passing through said slot, and a closed position preventing the beam coming from the object from going through the slot (M1-F).

2. The imaging spectrophotometer according to claim 1, wherein the blocking device (OBT) comprises a black blade pivotally mounted in front of the front face of the first mirror and two abutments (B1, B2) making it possible to define the two positions.

3. The imaging spectrophotometer according to any of the preceding claims, wherein the source (S) of the illumination assembly (ES) is configured to emit a beam in the ultraviolet, visible or infrared domain, and is preferably a Laser, the illumination assembly further comprising an assembly (L, LC, LLG) for shaping the beam emitted by the source in order to illuminate only one line on the object (O) to be analyzed.

4. The spectrophotometer according to any one of the preceding claims, wherein the illumination assembly (ES) comprises a flat mirror (MI) for injecting the shaped beam towards the focusing mirror (M2), the shaped beam being such as its image, which is formed on the first fold mirror (M1), after reflection on said flat injection mirror (MI), then on the focusing mirror (M2), then on the first fold mirror (M1), then on the scanning mirror (M0), then on the object (O) then again on the scanning mirror (M0), and again on the first mirror (M1) and on the focusing mirror (M2), is superimposed on the slot (M1-F) of the first fold mirror (M1).

5. The imaging spectrophotometer according to the preceding claim, wherein the shaping assembly comprises, in the direction of propagation of the light beam, a lens (LLG) generating a ray that is uniform in irradiation, a cylindrical lens (LC) collimating on the axis of the ray, a lens (L) for adapting the magnification.

6. The imaging spectrophotometer according to any of claims 1 to 3, wherein the illumination assembly (ES') comprises an integral sphere (11) placed in front of the source (S'), the sphere (11) comprising a slot (S'-F) configured to allow passing a light beam.

7. The imaging spectrophotometer according to the preceding claim, wherein the illumination assembly (ES') further comprises a spherical mirror (MS') pierced with a ring centered on the slot (S'-F) of the sphere and is disposed in front of the sphere,
said spherical mirror (MS') being configured to allow a beam to pass and to reflect light and return it to the sphere (11).

8. The imaging spectrophotometer according to any of claims 1 to 7, comprising an imaging assembly (Eⱼ) and a detection assembly (E_{DET}), the imaging assembly being arranged relative to the first mirror (M1) to bring a beam from the slot (M1-F) towards the detection assembly (E_{DET}).

9. The imaging spectrophotometer according to the preceding claim, wherein the detection assembly (E_{DET}) comprises a CCD or CMOS sensor.
